# FASCICULE DE BREVET EUROPEEN

(11) **EP 1 452 749 B1**
(45) Date de publication et mention de la délivrance du brevet: **21.06.2006**
(21) Numéro de dépôt: 04100727.9
(22) Date de dépôt: 25.02.2004
(51) Int. Cl.: F16C 3/04, F16C 3/28, F16C 11/02, F16C 11/04

(54) **Dispositif de jonction articulée**
Vorrichtung zur gelenkigen Verbindung
Device for an articulated junction

(30) Priorité: 26.02.2003 FR 0302340
(43) Date de publication de la demande: 01.09.2004
(73) Titulaire: AIRBUS France, 31060 Toulouse (FR)
(72) Inventeur: Marche, Hervé, 31120, Roquettes (FR)
(74) Mandataire: Poulin, Gérard

(56) Documents cités:
- EP-A- 0 397 966
- FR-A- 2 795 783
- GB-A- 1 250 685
- US-A- 3 145 021
- US-A- 4 948 185
- PATENT ABSTRACTS OF JAPAN vol. 014, no. 033 (M-923), 22 janvier 1990 (1990-01-22) & JP 01 269762 A (TOKAI SHINKU KENKYUSHO:KK), 27 octobre 1989 (1989-10-27)

## Description

### DOMAINE TECHNIQUE

L'invention concerne un dispositif compact de jonction articulée, prévu notamment pour être interposé entre une structure portante et une structure suspendue.

### ETAT DE LA TECHNIQUE ANTERIEURE

Il est connu de relier une structure suspendue à une structure portante au moyen d'une manille.

La structure portante comporte alors une chape qui fait saillie vers le bas et sur laquelle l'extrémité haute de la manille est articulée par un premier axe. L'extrémité basse de la manille est articulée par un deuxième axe sur une chape solidaire de la structure suspendue. Cette dernière chape fait alors saillie vers le haut ou latéralement à partir de la structure suspendue.

Cet agencement a pour inconvénient de présenter un encombrement important dans une direction verticale, du fait de la présence de la manille reliant les chapes qui font saillie vers le haut ou latéralement sur la structure suspendue et vers le bas en dessous de la structure portante.

### EXPOSÉ DE L'INVENTION

L'invention a précisément pour but de proposer un nouveau dispositif de jonction compact dans une direction verticale, apte à être utilisé à la place d'une manille traditionnelle pour l'accrochage d'une structure suspendue sous une structure portante et en transmettant des charges qui restent acceptables par rapport à celles qui sont transmises par les manilles utilisées sur les dispositifs existants.

Conformément à l'invention, cet objectif est atteint, au moins en partie, grâce à l'utilisation d'un dispositif de jonction articulée conforme à la revendication 1.

Cet agencement conforme à l'invention permet de relier une structure suspendue à la structure portante, de façon compacte.

Avantageusement, la structure suspendue a la forme d'une chape en U comportant deux plaques parallèles entre lesquelles est placée la stucture portante, une première pièce étant montée dans chacune des plaques de la structure suspendue.

Dans ce dernier cas, deux premières pièces sont, de préférence, montées respectivement dans chacune des deux plaques de la structure suspendue. Ces premières pièces coopérent alors avec les deux plaques de la structure suspendue par des surfaces en forme de portions de sphères définissant entre les plaques et lesdites pièces une liaison de type rotule.

Des pièces intermédiaires formant cages de rotule peuvent alors être fixées dans chacune des deux plaques de la structure suspendue. Ces pièces intermédiaires coopèrent par des surfaces intérieures en forme de portions de sphères avec des surfaces extérieures en forme de portion de sphères des premières pièces.

### BRÈVE DESCRIPTION DES DESSINS

On décrira à présent, à titre d'exemple non limitatif, un mode de réalisation préféré de l'invention, en se référant aux dessins annexés, dans lesquels :
- la figure 1 est une vue en perspective éclatée qui illustre un mode de réalisation préféré du dispositif de jonction compact selon l'invention ;
- la figure 2 est une vue en perspective éclatée qui illustre un perfectionnement au mode de réalisation du dispositif de jonction selon l'invention illustré sur la figure 1 ; et
- la figure 3 est une vue en coupe qui représente une variante du perfectionnement illustré sur la figure 2.

### EXPOSÉ DÉTAILLÉ D'UN MODE DE RÉALISATION PARTICULIER

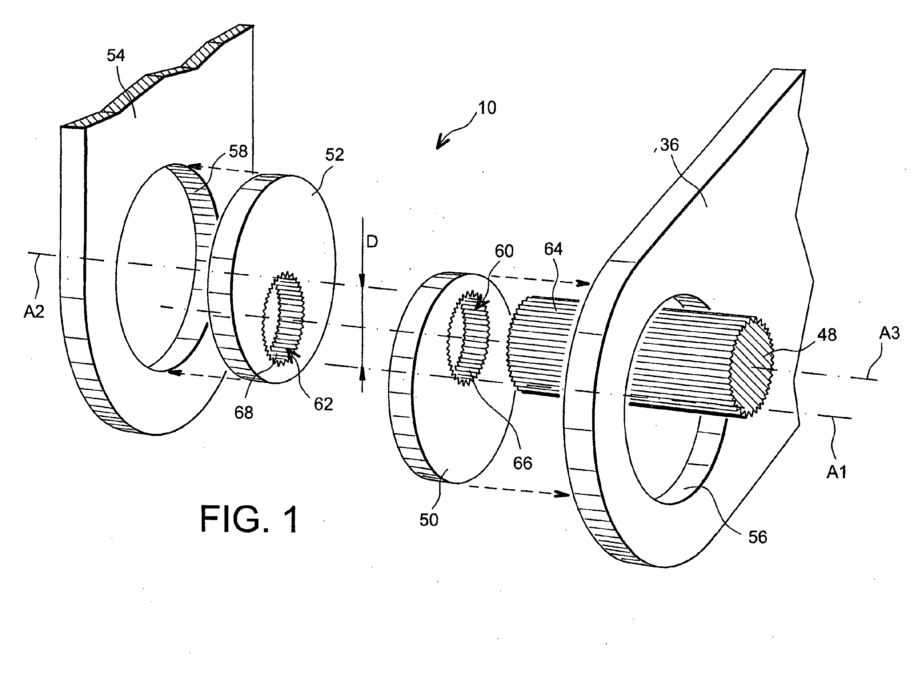

Dans le mode préféré de réalisation de l'invention illustré sur la figure 1, un dispositif de jonction articulée 10 est utilisé pour relier de façon pivotante une structure suspendue 36 à une structure porteuse 54.

Dans le mode de réalisation de l'invention représenté sur la figure 1, le dispositif de jonction articulée 10 comprend un axe d'articulation unique 48, une première pièce 50 en forme de disque et une deuxième pièce 52 en forme de disque, généralement identique à la première.

De façon plus précise, la première pièce 50 en forme de disque est montée dans un trou cylindrique 56 traversant la structure suspendue 36 selon un premier axe A1, de telle sorte que la première pièce 50 peut tourner librement autour de ce premier axe.

De façon comparable, la deuxième pièce 52 en forme de disque est montée dans un trou cylindrique 58 qui traverse la structure porteuse 54 selon un deuxième axe A2, de telle sorte que la deuxième pièce 52 peut tourner librement autour de ce deuxième axe.

Le deuxième axe A2 est parallèle au premier axe A1. En outre, le deuxième axe A2 est décalé verticalement vers le haut par rapport au premier axe A1 d'une distance D qui peut être légèrement supérieure, sensiblement égale ou même inférieure au diamètre de l'axe d'articulation 48.

L'axe d'articulation 48 a un diamètre sensiblement inférieur à celui des pièces 50 et 52. Il traverse des trous cylindriques 60 et 62 usinés respectivement dans la première pièce 50 en forme de disque et dans la deuxième pièce 52 en forme de disque. Plus précisément, l'axe A3 commun aux trous cylindriques 60 et 62 et à l'axe d'articulation 48 est excentré par rapport aux axes respectifs A1 et A2 des pièces 50 et 52.

L'agencement qui vient d'être décrit en se référant à la figure 1 permet de réduire la hauteur du dispositif de jonction, par rapport à une manille classique.

De préférence et comme on l'a représenté schématiquement sur la figure 1, des moyens anti-rotation sont prévus entre l'axe d'articulation 48 et chacune de pièces 50 et 52 en forme de disque. Ces moyens anti-rotation comprennent, par exemple, des dentures ou des cannelures 64 formées sur la surface périphérique de l'axe d'articulation 48, en prise sur des dentures ou des cannelures complémentaires 66 et 68 formées respectivement dans les trous cylindriques 60 et 62.

Ce dernier agencement permet de supprimer un degré de liberté dans la liaison ainsi obtenue entre la structure suspendue 36 et la structure porteuse 54.

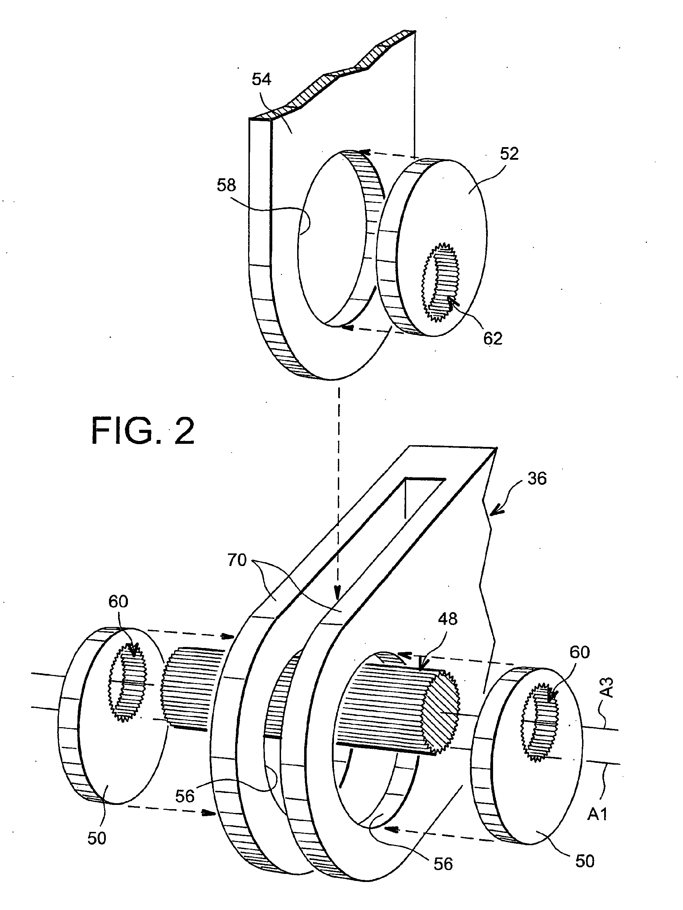

La figure 2 illustre une variante du mode de réalisation illustré sur la figure 1, dans laquelle la structure suspendue 36 a la forme d'une chape en U. Plus précisément, la structure suspendue 36 illustrée sur la figure 2 comprend deux plaques planes 70, parallèles entre elles. Dans ce cas, un trou cylindrique 56 est usiné dans chacune des plaques 70, de telle sorte que les deux trous 56 soient centrés sur le même axe A1.

Chacun des trous cylindriques 56 reçoit alors une pièce 50 en forme de disque, traversée par un trou cylindrique 60 dont le diamètre est le même que celui de l'axe d'articulation 48.

Dans ce cas, la patte matérialisant la structure porteuse 54 est placée entre les plaques parallèles 70 de la structure suspendue 36, avec la pièce en forme de disque 52 reçue de façon tournante dans le trou cylindrique 58, comme dans le mode de réalisation de la figure 1.

L'axe d'articulation 48 traverse alors simultanément chacun des trous cylindriques 60 et 62 formés respectivement dans les deux pièces en forme de disque 50 et dans la pièce en forme de disque 52. L'axe d'articulation 48 assure ainsi la liaison entre la structure suspendue 36 et la structure porteuse 54. La cohésion de cette liaison peut notamment être assurée par des flasques, écrous, etc. placés aux extrémités de l'axe d'articulation 48.

Comme dans le mode de la figure 1, des moyens anti-rotation tels que des cannelures peuvent être prévus entre l'axe d'articulation 48 et les trous cylindriques 60 et 62 dans lesquels cet axe est reçu. On supprime ainsi un degré de liberté dans la liaison prévue entre la structure suspendue 36 et la structure porteuse 54.

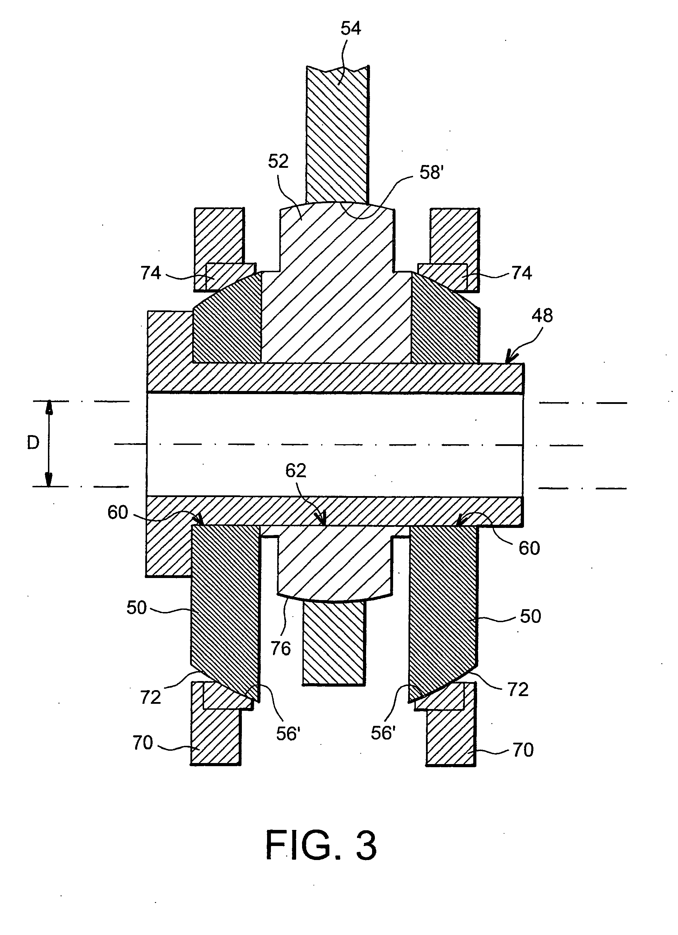

Sur la figure 3, on a représenté un perfectionnement à la variante de réalisation qui vient d'être décrite en référence à la figure 2.

Dans ce cas, une fonction "rotule" est ajoutée au dispositif de jonction par lequel la structure suspendue 36 est reliée à la structure porteuse 54.

De façon plus précise, chacune des pièces en forme de disque 50 montées dans les plaques 70 de la structure suspendue 36 présente une surface périphérique 72 en forme de portion de sphère. Des pièces intermédiaires 74 formant cages de rotules sont montées dans chacune des plaques 70, pour y définir des surfaces intérieures 56' en forme de portions de sphères. Ces surfaces intérieures sont complémentaires des surfaces périphériques 72 des pièces en forme de disque 50 et présentent un centre de rotation commun. Ainsi, lorsque les pièces en forme de disque 50 sont reçues dans les pièces intermédiaires 74, elles assurent une liaison de type rotule entre l'axe de pivotement 48 et la structure suspendue 36.

De façon comparable, la pièce en forme de disque 52 présente une surface périphérique extérieure 76 en forme de portion de sphère, complémentaire d'une surface intérieure 58', en forme de portion de sphère, de la structure porteuse 54. Ainsi, lorsque la pièce en forme de disque 52 est reçue dans la structure porteuse 54, les surfaces complémentaires 76 et 58' relient l'axe de pivotement 48 et la structure porteuse 54 par une liaison de type rotule.

Comme on l'a illustré sur la figure 3, les deux liaisons de type rotule ainsi formées ont des centres qui sont décalés d'une distance D l'un par rapport à l'autre selon une direction verticale. Cette distance D est la même que dans le mode de réalisation de la figure 1 décrit précédemment.

Dans le perfectionnement qui vient d'être décrit en référence à la figure 3, seul un degré de liberté des dispositifs de jonction 10 est figé. En outre, la plus grande compacité du dispositif selon l'invention, par rapport à un dispositif classique de type "manille", s'accompagne aussi d'une réduction du poids.

## Revendications

1. Dispositif de jonction articulée reliant une structure suspendue(36) à une structure portante (54) par deux axes parallèles, le dispositif étant **caractérisé en ce qu'**il comprend un axe d'articulation (48), au moins une première pièce (50) montée dans la structure suspendue (36) de façon à pouvoir tourner autour d'un premier axe (A1) et une deuxième pièce (52) montée dans la structure portante (54), de façon à pouvoir tourner autour d'un deuxième axe (A2), l'axe d'articulation (48) traversant la première pièce (50) et la deuxième pièce (52), le premier axe (A1) et le deuxième axe (A2) étant parallèles entre eux et décalés l'un par rapport à l'autre, et des moyens anti-rotation (64, 66, 68) étant prévus entre l'axe d'articulation (48) et chacune des première et deuxième pièces (50, 52), de façon à interdire toute rotation relative entre eux.

2. Dispositif de jonction articulée selon la revendication 1, dans lequel la structure suspendue (36) a la forme d'une chape en U comportant deux plaques parallèles (70) entre lesquelles est placée la structure portante (54), une première pièce (50) étant montée dans chacune des plaques (70) de la structure suspendue (36).

3. Dispositif de jonction articulée selon la revendication 2, dans lequel deux premières pièces (50) sont montées respectivement dans chacune des deux plaques (70) de la structure suspendue (36), lesdites premières pièces (50) coopérant avec les deux plaques (70) de la structure suspendue (36) par des surfaces (72, 56') en forme de portions de sphères définissant entre les plaques (70) et lesdites pièces (50) une liaison de type rotule.

4. Dispositif de jonction articulée selon la revendication 3, dans lequel des pièces intermédiaires (74) formant cages de rotule sont fixées dans chacune des deux plaques (70) de la structure suspendue (36) et coopèrent par des surfaces intérieures (56') en forme de portions de sphères avec des surfaces extérieures (72) en forme de portion de sphères des premières pièces (50).

## Claims

1. Articulated junction device between a suspended structure (36) and a load bearing structure (54) by two parallel axes, the device being **characterized in that** it comprises a hinge pin (48), at least one first part (50) being installed in the suspended structure (36) so as to be able to rotate about a first axis (A1) and a second part (52) installed in the load bearing structure (54) so as to be able to rotate about a second axis (A2), the hinge pin (48) passing through the first part (50) and the second part (52), the first axis (A1) and the second axis (A2) being parallel to each other and offset from each other and rotation prevention means (64, 66, 68) are provided between the hinge pin (48) and each of the first and second parts (50, 52), so as to prevent any relative rotation between them.

2. Articulated junction device according to claim 1, wherein the suspended structure (36) is in the form of a U-shaped clevis comprising two parallel plates (70), between which the load bearing structure (540 is placed, a first part (50) being fitted in each of the plates (70) of the suspended structure (36).

3. Articulated junction device according to claim 2, wherein each of two first parts (50) is preferably installed in the corresponding one of the two plates (70) of the suspended structure (36), the said first parts (50) cooperating with the two plates (70) in the suspended structure (36) through surfaces (72, 56') in the form of portions of spheres together defining a ball joint-type connection between the plates (70) and the said parts (50).

4. Articulated junction device according to claim 3, wherein intermediate parts (74) forming ball joint cages are fixed in each of the two plates (70) of the suspended structure (36) and cooperate through internal surfaces (56') in the form of portions of spheres with external surfaces (72) of the first parts (50), in the form of portions of spheres.

## Patentansprüche

1. Gelenkverbindungsvorrichtung, die eine Aufhängungsstruktur (36) mit einer tragenden Struktur (54) über zwei parallele Achsen verbindet, wobei die Vorrichtung **dadurch gekennzeichnet ist, dass** sie eine Gelenkachse (48), mindestens ein erstes, in der Aufhängungsstruktur (36) um eine erste Achse (A1) auf drehbare Weise angebrachtes Teil (50) sowie ein in der tragenden Struktur (54) um eine zweite Achse (A2) auf drehbare Weise angebrachtes Teil (52) umfasst, wobei die Gelenkachse (48) das erste Teil (50) und das zweite Teil (52) durchsetzt, die erste Achse (A1) und die zweite Achse (A2) zueinander parallel und in Bezug zueinander versetzt sind, und Anti-Rotationsmittel (64,66,68) zwischen der Gelenkachse (48) und jedem der ersten und zweiten Teile (50,52) vorgesehen sind, so dass jegliche Relativdrehung zwischen ihnen unterbunden ist.

2. Gelenkverbindungsvorrichtung nach Anspruch 1, wobei die Aufhängungsstruktur (36) die Form eines U-förmigen Gabelgelenks mit zwei parallelen Platten (70) hat, zwischen denen die tragende Struktur (54) angeordnet ist, wobei ein erstes Teil (50) in jeder der Platten (70) der Aufhängungsstruktur (36) angebracht ist.

3. Gelenkverbindungsvorrichtung nach Anspruch 2, wobei die beiden ersten Teile (50) jeweils in jeder der beiden Platten (70) der Aufhängungsstruktur (36) angebracht sind, und die ersten Teile (50) mit den zwei Platten (70) der Aufhängungsstruktur (36) über Oberflächen (72,56') in Form von sphärischen Abschnitten zusammenwirken, welche zwischen den Platten (70) und den Teilen (50) eine Verbindung vom Kugelgelenktyp festlegen.

4. Gelenkverbindungsvorrichtung nach Anspruch 3, wobei Zwischenteile (74), die Kugelgelenkkäfige bilden, in jeder der beiden Platten (70) der Aufhängungsstruktur (36) befestigt sind und über Innenflächen (56') in Form von sphärischen Abschnitten mit Außenflächen (72) in Form von sphärischen Abschnitten der ersten Teile (50) zusammenwirken.
